# FASCICULE DE BREVET EUROPEEN

(11) **EP 0 448 485 B1**
(45) Date de publication et mention de la délivrance du brevet: **30.11.1994**
(21) Numéro de dépôt: 91420094.4
(22) Date de dépôt: 20.03.1991
(51) Int. Cl.: B23Q 1/18

(54) **Module linéaire de guidage pour la translation et la manutention de toutes pièces et accessoires**
Linearer Führungsmodul zum Verschieben und Handhaben von Teilen und Zubehör
Linear guide module for translation and manipulation of pieces and accessories

(30) Priorité: 22.03.1990 FR 9003985
(43) Date de publication de la demande: 25.09.1991
(73) Titulaire: KINETIC TECHNOLOGIES, F-42000 Saint-Etienne (Loire) (FR)
(72) Inventeur: Coron, Jean-Paul, F-69440 Saint Maurice sur Dargoire (FR)
(74) Mandataire: Dupuis, François

(56) Documents cités:
- EP-A- 0 106 826
- EP-A- 0 322 509
- EP-A- 0 327 705
- DE-A- 3 336 496
- DE-A- 3 734 922
- DE-A- 3 815 595

## Description

L'invention concerne un module linéaire de guidage selon le préambule de la revendication 1.

L' invention se rattache au secteur technique des moyens de manutention et de déplacement en ligne de pièces trouvant notamment des applications dans les automatismes et en particulier pour les machines, machines-outils, centres d'usinage à commande numérique, robots industriels et tous systèmes d'alimentation automatiques, appareils de mesure, manipulateurs.

Le concept de module linéaire, de transfert et de manutention, est connu depuis de très nombreuses années et est largement exploité, notamment dans les secteurs techniques précités. Il s'agit en général d'éléments prêts à monter qui sont fixés sur un plan d'appui par leur partie basse inférieure et qui sont agencés avec une structure profilée autorisant un déplacement alternatif en va et vient selon un cycle déterminé d'un chariot sur lequel est fixée une ou des pièces ou outils ou autres, susceptible de fonctionner et d'intervenir selon un cycle préétabli dans un mouvement de va et vient continu.

La structure précitée du module est obtenue par une forme profilée en aluminium rigide obtenue par filière et présentant intérieurement un espace pour le guidage et déplacement du chariot transfert. On utilise des systèmes de guidage et d'entrainement du type vis à billes, galets et autres, ou courroie crantée, ou vérins

Pour assurer une protection du module linéaire, et en particulier de ses mécanismes intérieurs, il est utilisé des bandes de protection, dans le cas du chariot monté sur une vis à billes, ou ce sont les courroies d'entraînement du chariot elles-mêmes qui assurent la protection des mécanismes a l'intérieur de la structure. Les courroies d'entraînement sont par exemple montées entre deux tambours ou galets de renvoi ou similaires, situés prés des extrémités à l'intérieur du module linéaire. Les courroies sont associées fixement au chariot transporteur par tous moyens de liaison approprié. Ces derniers sont agencés généralement avec une fente horizontale etablie dans toute leur longueur pour permettre le passage des courroies. C'est par exemple le cas du module linéaire décrit dans le Brevet allemand 3.815.595.

Le module linéaire est agencé ainsi avec un corps de grande longueur à l'intérieur duquel se déplace un trainard dont la partie supérieure est agencée pour recevoir des pièces et/ou accessoires, tandis que la partie inférieure est associée en étant posée et fixée sur une surface plan rectiligne d'un chariot assurant sa translation. Les profils actuels du corps sont établis en forme de H afin d'autoriser le passage et positionnement du trainard ainsi que la mise en place des moyens d'étanchéité sous forme de bandes de protection, soufflets ou autres. Une telle forme est en particulier décrite dans le Brevet allemand précité. Elle entraîne cependant des montages complexes des moyens d'étanchéité, d'autre part elle limite et réduit l'inertie du corps du module. Par ailleurs, la face de fond du corps du module est aménagée avec un évidement central pour permettre d'une part le positionnement des moyens de liaison et de fixation d'un rail de guidage sur lequel coulisse le trainard, et d'autre part le positionnement d'une bande de protection et d'étanchéité. De tels agencements exigent une adaptation particulière du corps, limite son inertie de par les formes et échancrures établies. Par ailleurs, il est nécessaire d'utiliser des moyens complémentaires de protection du brin inférieur de la courroie d'entraînement situé dans la partie basse du corps. En outre, le corps du module est agencé pour un seul type de moyens d'étanchéité. Par ailleurs, le positionnement du trainard sur le ou les chariots est aléatoire dépendant des seuls moyens de fixation, ces derniers etant les seuls moyens mécaniques pour absorber les efforts latéraux.

Face a ces différents inconvénients, le but recherché selon l'invention était de concevoir un nouveau profil du corps du module, de conception et fabrication simples, qui assure et confère le maximum d'inertie compte tenu des contraintes d'utilisation du module.

Un autre but était de concevoir un module qui permette l'utilisation de différents moyens de translation du trainard dont la partie supérieure débordante du corps du module est agencée pour recevoir des pièces et différents accessoires.

Un autre but était de concevoir un module assurant une parfaite protection de mécanismes internes de guidage du trainard.

Un autre but était de concevoir un module sur lequel il peut être utilisé différents types de moyens d'étanchéité pour assurer la protection de l'ensemble des différents mécanismes.

Ces buts et d'autres encore ressortiront bien de la suite de la description.

Selon l'invention, le module linéaire de guidage précité est caractérisé en ce que la face supérieure du corps présente des rabats définissant une fente de passage de la partie supérieure au trainard,
et en ce que la base inférieure du corps présente sur toute sa longueur, dans son épaisseur et intérieurement, l'ouverture longitudinale autorisant le positionnement et la protection de la réglette, la face extérieure de ladite base inférieure du corps étant rectiligne,
et en ce que le trainard présente une base inférieure avec une cavité susceptible d'autoriser son positionnement et son centrage sur des chariots transporteurs coulissant le long du rail de guidage,
et en ce que le trainard est agencé dans sa partie supérieure avec une forme en I en présentant l'étranglement entourant les bords supérieurs du corps du module tout en débordant de celui-ci,
et en ce que le moyen d'entraînement du trainard est disposé totalement à l'intérieur du volume du corps du module, ledit moyen d'entraînement étant agencé à ses extrémités pour s'adapter sur les flasques ou embouts du corps du module pour permettre son fonctionnement,
et en ce que le corps du module présente intérieurement sur ses parois latérales des évidements profilés autorisant le positionnement et le guidage d'une pluralité de corps formant flasques assurant un guidage complémentaire du trainard à l'intérieur du corps du module.

Ces caractéristiques et d'autres encore ressortiront bien de la suite de la description.

Pour fixer l'objet de l'invention illustrée d'une manière non limitative aux figures des dessins où :
La figure 1 est une vue en perspective du module linéaire de guidage selon l'invention avec un premier mode de réalisation du moyen d'entraînement du trainard, ce moyen étant une vis.
La figure 2 est une vue en coupe longitudinale selon la ligne 1-1 de la figure 1.
Les figures 3 et 4 sont des vues en coupe transversale selon les lignes 3-3, 4-4.
La figure 5 est une vue en coupe longitudinale du module linéaire de guidage selon l'invention avec une seconde mise en oeuvre du moyen d'entraînement du trainard, ce moyen étant une courroie.
La figure 6 est une vue en plan en coupe selon la ligne 6-6 de la figure 5 montrant en particulier le système d'attache de la courroie.
La figure 7 est une demi-vue en plan selon la figure 6 montrant la mise en tension du système d'attache de la courroie.
La figure 8 est une vue en coupe transversale selon la ligne 8-8 de la figure 5.
La figure 9 est une vue partielle en coupe longitudinale semblable à la figure 2 illustrant des moyens complémentaires de guidage associés au dplacement du trainard.
La figure 10 est une vue à caractère schématique montrant le déplacement du trainard dans le module linéaire de guidage avec de part et d'autre une pluralité de moyens de guidage complémentaires.
La figure 11 est une vue montrant un tirant associé aux différents moyens précités de la figure 10.
La figure 12 est une vue en coupe selon la ligne 9-9 de la figure 2.

Afin de rendre plus concret l'objet de l'invention, on le décrit maintenant d'une manière non limitative en se référant aux exemples de réalisation des figures des dessins.

Le module linéaire de guidage comprend un corps (1) réalisé en aluminium obtenu par filage. Ce corps, creux intérieurement, présente, sur sa face supérieure (1-1), une fente horizontale ou ouverture autorisant le positionnement d'une bande d'étanchéité et de protection (2) et le passage de la partie supérieure de la table ou trainard (3) susceptible de recevoir des pièces ou accessoires.

Le corps (1) présente sur ses côtés latéraux (1-3, 1-4) et sa face de fond rectiligne (1-5) des échancrures profilées (1-6) autorisant le positionnement de moyens de bridage et de fixation par rapport à un plan d'appui. Le corps présente, dans sa base inférieure, des ouvertures profilées d'allègement (1-7). La base inférieure est horizontale et utilise comme plan d'appui la largeur maximum du corps de guidage pour donner le maximum d'inertie au corps. Dans sa partie médiane, la base inférieure du corps présente sur toute sa longueur, une ouverture longitudinale dans laquelle peut être positionnée une réglette de liaison (16), cet agencement permettant dans le même volume du corps de limter la diminution de l'inertie, en conservant un plan d'appui inférieur non évidé.

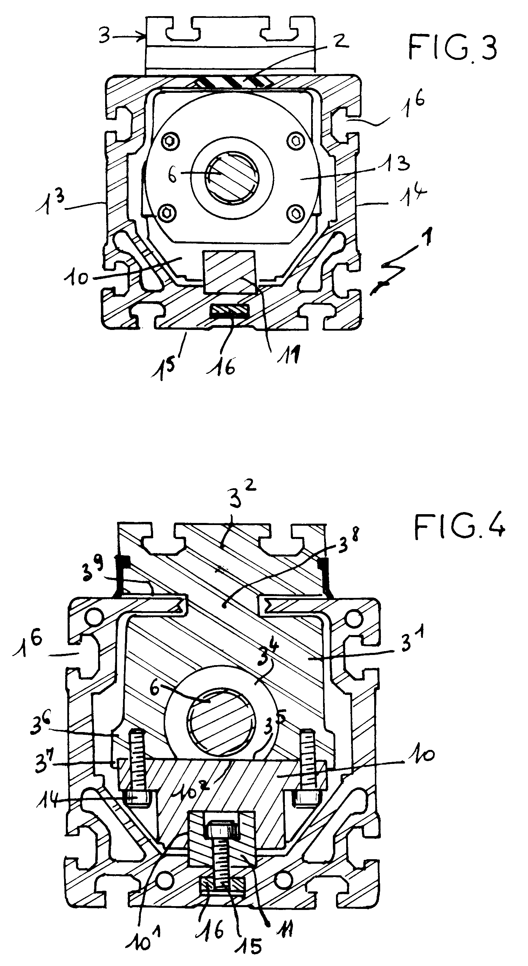

Ainsi qu'il apparaît aux figures 3, 4 et 7, la partie supérieure du corps présente des bords (1-8) formant un rabat définissant une fente réduite de passage et de positionnement d'une bande de protection ; ces bords sont établis le cas échéant avec un profil pour assurer le maintien et la tenue de ladite bande de protection, en fonction des caractéristique du dispositif d'étanchéité choisi.

Les extrémités latérales du corps sont agencées avec des flasques avant et arrière (4 et 5) qui sont fixés audit corps par tous moyens de liaison appropriés.

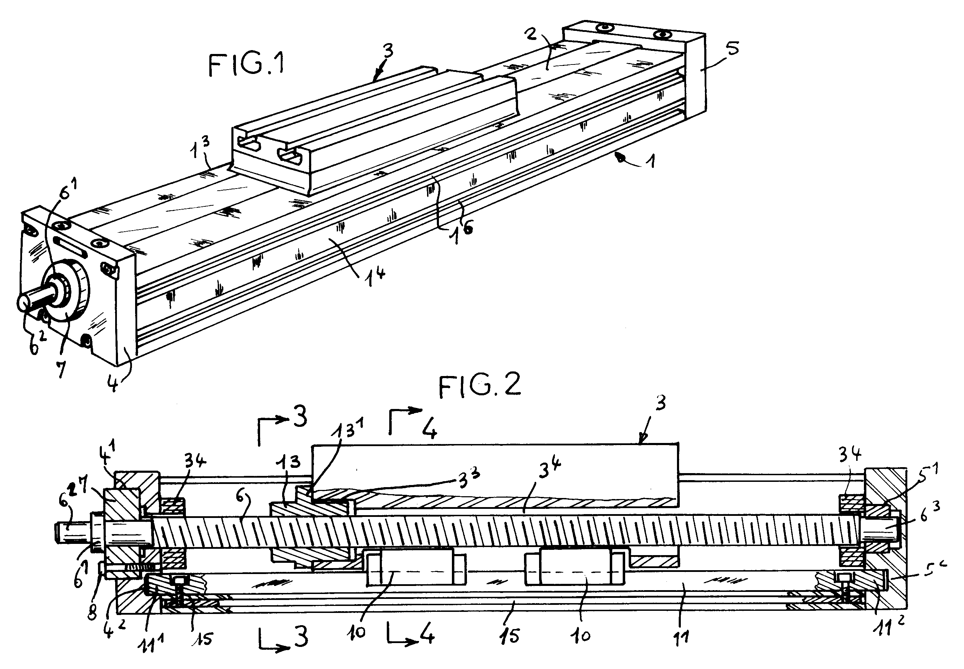

Les flasques sont agencés et profilés pour venir fermer et obturer les extrémités du corps (1) et sont fixés à ce dernier par des vis de liaison. En outre et dans une première mise en oeuvre des mécanismes de déplacement du trainard illustré figures 1 et 4, ils sont agencés dans leur partie centrale pour permettre le guidage et rotation d'un axe de guidage (6) disposé sur toute la longueur du corps. A cet effet, le flasque avant (4) présente un épaulement (4-1) intérieur autorisant le positionnement de paliers (7) de rotation de l'axe de guidage. Le palier, par sa partie fixe est solidarisé au corps par vis de liaison (8), tandis que l'axe de guidage déborde extérieurement du corps et est agencé pour recevoir un écrou de blocage (6-1) venant en butée contre le palier. L'extrémité avant (6-2) de l'axe de guidage deborde pour autoriser son entraînement par tous moyens de commande appropriés. Le flasque arrière (5) est également agencé avec un alésage central (5-1) pour l'engagement de l'autre extrémité (6-3) de l'axe de guidage. Les paliers (4 et 5) présentent d'autres aménagements qui seront décrits par ailleurs.

Le module linéaire permet le déplacement longitudinal contrôlé du trainard (3) qui est susceptible d'être déplacé le long du corps en mouvement de va et vient selon un cycle prédéterminé. Ce trainard présente deux parties distinctes à savoir une base (3-1) profilée susceptible d'entourer l'axe de guidage (6), et de venir en appui et centrage sur un ou des chariots transporteurs (10) qui se déplacent sur un rail de guidage (11) disposé dans le fond du corps (1). Ce trainard est agencé, en outre, dans sa partie supérieure (3-2) dans le prolongement de la précédente avec un profil adapté définissant un étranglement (3.8) puis en débouchant à l'extérieur du corps pour constituer une table d'appui des pièces et accessoires. Ainsi le trainard présente de part et d'autre de son plan médian deux fentes ou échancrures (3.9) s'engageant autour du profil des rabats (1.8) supérieur du corps.

Le trainard est également agencé sur sa face avant avec un alésage (3-3) autorisant le positionnement d'une bague écrou (13) montée sur l'axe de guidage ; ladite bague écrou présente une collerette ou bride extérieure (13-1) susceptible de venir en butée avant et être fixée contre le trainard. La rotation de l'axe de translation sur lui-même provoque, ainsi, le déplacement linéaire contrôlé de la bague écrou et la poussée du trainard. Par ailleurs, il est possible de disposer une seconde bague écrou (13) sur l'axe de guidage (6) à l'opposé de la précédente pour assurer une mise en contrainte et prétarage de l'ensemble.

Par ailleurs des éléments amortisseurs (34) sont montés sur la vis et constituent des moyens de fin de course du trainard.

Ainsi qu'il apparait aux dessins, le trainard présente dans sa base un évidement central (3-4) ouvert susceptible d'entourer l'axe de translation en débouchant sur la face externe inférieure du trainard pour constituer une cavité (3-5), susceptible de positionner et centrer le ou les chariots (10). Le trainard présente également sur sa base inférieure des profilés ou pattes (3-6) permettant l'insertion de moyens de liaison et d'attache (14) du type vis de fixation pour l'accoupler sur le ou les chariots.

Le ou les chariots sont établis sous forme de corps venant en appui et guidage sur un rail (11) disposé le long du corps du module, et dans un évidement (11.3) longitudinal ménagé a cet effet, et dont les extrémités (11-1) (11-2) sont engagées et prennent appui dans des ouvertures profilées (4-2) (5-2) formées sur les flasques transversaux avant et arrière du module. Par cete assemblage, on assure un parallélisme constant et régulier des entraxes entre le rail et l'axe de translation. Un moyen de liaison (15) du type vis assure le positionnement du rail et de la réglette (16) sous-jacente. Ainsi, les chariots, deux en l'occurence, en nombre fonction de la charge appliquée sur le trainard, sont agencés à leur base avec un évidemment profilé en U (10-1) pour s'adapter et chevaucher le rail, tandis qu'ils présentent sur leur partie supérieure une base d'appui (10-2) rectiligne et horizontale sur laquelle prend appui, la base inférieure du trainard.

Selon une disposition importante de l'invention, ainsi qu'il apparait aux dessins, la base d'appui (3-5) du trainard présente une bordure périphérique (3-7) autorisant son centrage et encastrement par rapport à le ou les chariots. Ces derniers se trouvent situés dans la partie inférieure du corps des modules. Cet agencement du trainard par rapport au chariot permet d'obtenir un positionnement précis et non aléatoire. En outre, les parois de cette cavité permettent la transmission des efforts latéraux en toute indépendance des moyens de liaison et d'attache sur les chariots.

La conception telle que décrite du module permet ainsi de lui conférer une grande inertie et d'assurer une protection totale de l'environnement extérieur des différents mécanismes et moyens d'entraînement et déplacement du trainard. En outre, le corps du module linéaire est d'encombrement plus réduit.

Les moyens d'étanchéité susceptibles de protéger et recouvrir la fente longitudinale supérieure du corps du module peuvent être de tous types. Il peut être utilisé une bande de protection solidarisée ou non aux bords supérieurs du corps, en traversant le trainard longitudinal et de toutes manières appropriées. Dans ce cas, le trainard est agencé dans sa partie supérieure avec une ouverture profilée de passage et guidage de la bande. En variante, il peut être utilisé un dispositif d'étanchéité constitué par des soufflets de toute manière connue.

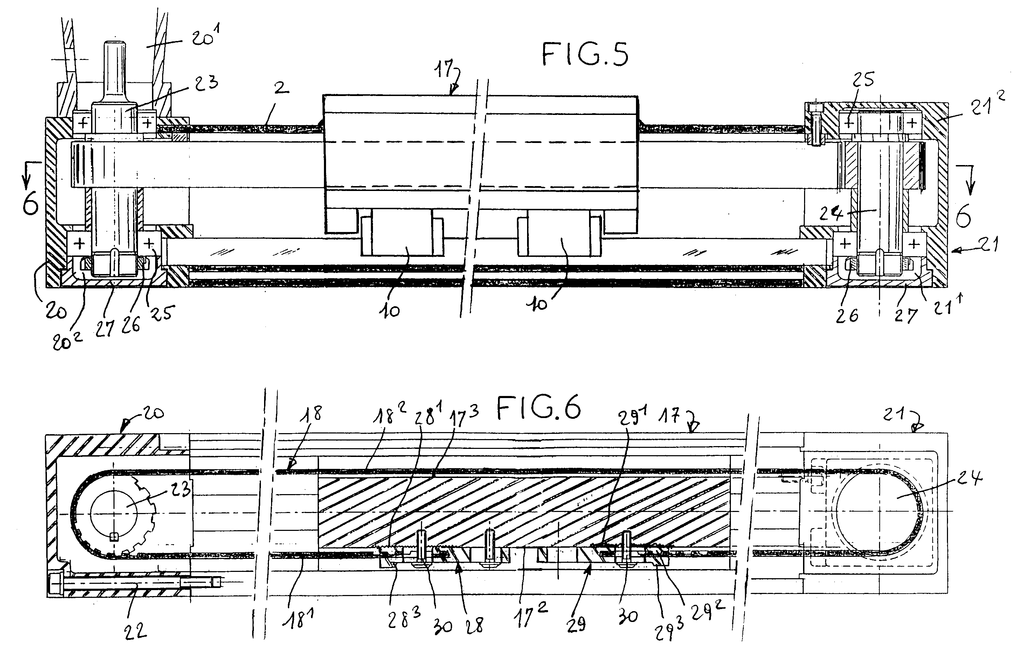

Selon une autre disposition et particularité de l'invention, le corps du module linéaire est établi sans modification des caractéristiques précitées pour autoriser l'insertion d'un autre mécanisme de déplacement du trainard, ainsi qu'illustré aux figures 5 à 8. Ce mécanisme est un ensemble à courroie. Il est précisé que les pièces similaires dans les deux mises en oeuvre conservent les mêmes références.

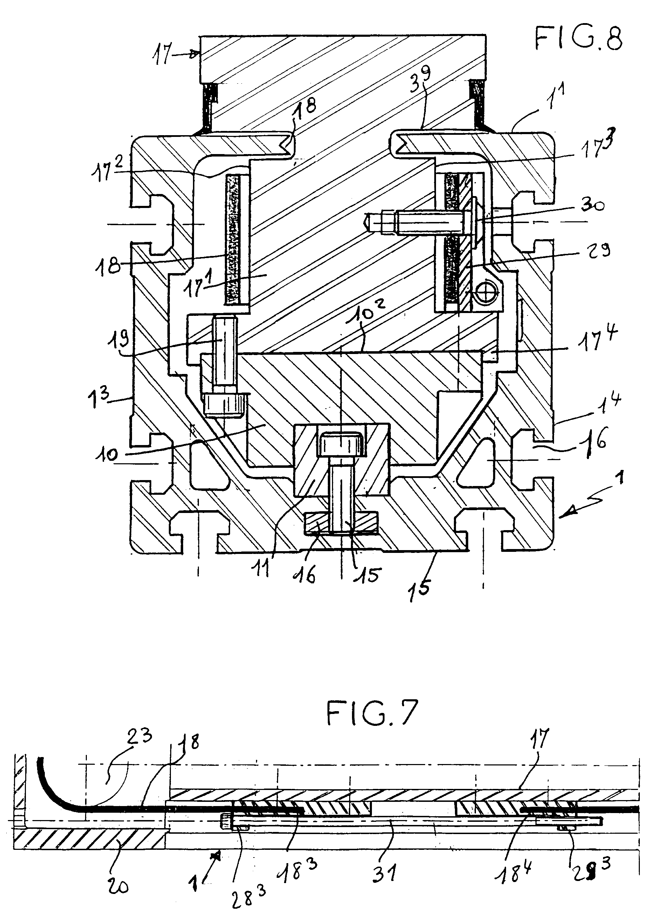

En se référant à la figure 8, on observe que le corps modulaire est strictement de même conception que précédemment et est agencé en particulier avec une base de fond (1.5) horizontale, des rabats supérieurs (1.8) horizontaux laissant une fente de passage du trainard et d'éventuels moyens d'étanchéité. La partie de fond du corps est aménagée pour recevoir un rail (11) et une réglette (16) avec un moyen de liaison (15) du type précité. Des chariots (10) sont agencés à leur base en U (10.1) pour s'adapter et chevaucher le rail (11).

Dans cette mise en oeuvre, le trainard (17) est de conception quasi similaire au trainard (3) à la différence qu'il est agencé pour coopérer et être entraîné par une courroie (18) disposée dans un plan horizontal avec brins verticaux, et non par une vis du type de celle précédemment décrite. A cet effet, le trainard (17) présente dans sa partie sous-jacente à la bordure supérieure du corps une masse (17.1) ayant deux faces (17.2) (17.3) parallèles et rectilignes dans leur zône médiane pour être en regard du passage des brins (18.1 - 18.2) de la courroie d'entraînement. Leurs extrémités peuvent être détalonnées pour faciliter le passage de la courroie. Ladite masse se prolonge par sa partie inférieure par un socle (17.4) venant en appui et centrage sur les chariots (10) du type précité. Des moyens (19) du type boulons assurent la liaison entre le trainard et les chariots.

Ainsi, la forme générale du trainard présente un profil en I et notamment et avantageusement pour son entrainement par courroie.

Ainsi qu'il apparaît, les brins de la courroie (18) se situent dans un plan vertical et sont intégrés à l'intérieur du corps du module en étant parfaitement protégés de l'extérieur, et sans aménagement particulier du corps du module.

En se référant aux figures 5 et 6 des dessins, on voit que le corps (1) du module linéaire reçoit à ses extrémités transversales, deux plaques formant embouts (20 - 21) qui sont fixés au corps par boulonnage (22) et similaires.

Chaque embout (20 - 21) est aménagé avec des ouvertures et collerettes intérieures pour recevoir respectivement un axe ou tambour meneur (23) et axe ou tambour mené (24) montés sur des paliers (25), des moyens de blocage (26) assurant la fixation et maintien de l'ensemble. L'embout (20) est agencé avec une ouverture supérieure (20.1) de passage de l'axe meneur (23) en vue de son accouplement avec un moyen moteur d'entraînement. Un cache (27) est disposé dans l'ouverture inférieure (20.2) et permet l'accès au moyen de blocage de l'axe. L'autre embout (21) est également aménagé dans sa partie inférieure avec une ouverture (21.1) pour la réception d'un cache (27). Par contre, la partie supérieure (21.2) de l'embout est obturée et sert de logement à des moyens de roulement (25).

Entre les axes (23 et 24), est disposée une courroie traversant dans sa longueur le corps du module linéaire, en se présentant en regard des faces rectilignes et parallèles (17.2 - 17.3) du trainard. Pour assurer l'entraînement de la courroie, celle-ci peut être agencée sur tout ou partie de sa longueur et sur sa face interne avec un crantage susceptible de coopérer avec une partie crantée complémentaire formée sur l'axe meneur (23). Par ailleurs, l'axe mené peut éventuellement être cranté également selon les applications données au module linéaire. Les axes (23 et 24) sont par ailleurs à position fixe.

En se référant à la figure 6, la courroie (18) est attachée et fixée par ses extrémités (18.3 - 18.4) en regard sur l'une des faces (17.2 ou 17.3) du trainard. Cette fixation s'opère par exemple de la manière suivante afin d'assurer une éventuelle mise en tension de la courroie. Des éléments formant pinces (28 - 29)) sont rapportés contre la paroi du trainard et sont fixés à celle-ci par boulonnage (30) ou similaires. La face interne (28.1 - 29.1) de la partie formant pince peut être crantée et coopérer avec un crantage complémentaire établi partiellement sur la face correspondante du trainard. On peut ainsi par rapprochement des pinces entre elles par rapport à leur moyen de fixation sur le trainard, assurer une mise en tension plus ou moins forte de la courroie. ces pinces sont aménagées intérieurement avec des ouvertures (28.2 - 29.2) dans lesquelles sont engagées les extrémités de ladite courroie, des moyens de serrage assurant leur tenue.

On a illustré à la figure 7 le moyen de serrage de la courroie par rapprochement de ses extrémités. Plus particulièrement, les pinces (28 et 29) présentent en bout des bords relevés (28.3 - 29.3) agencés avec des ouvertures filetées pour le passage d'une vis de mise en tension (31).

On voit dans cette mise en oeuvre, tout en conservant le profil du corps du module linéaire, que la courroie d'entraînement et de déplacement du trainard est parfaitement protégée de l'extérieur. En outre, il n'y a aucune zône d'affaiblissement du corps du module pour le passage des brins de la courroie.

Des moyens d'étanchéité pour recouvrir la fente supérieure du corps du module linéaire sont ensuite rapportés de toute manière appropriée. Ces moyens d'étanchéité peuvent être des soufflets, bandes de protection s'ajustant ou non dans la fente formée entre les bords supérieurs formant rabats du corps.

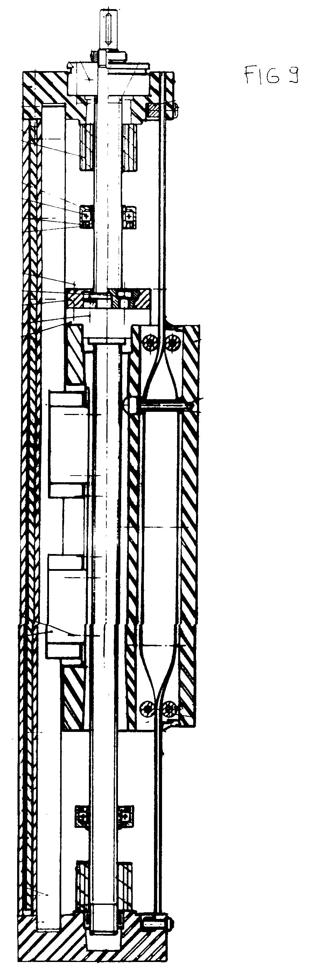

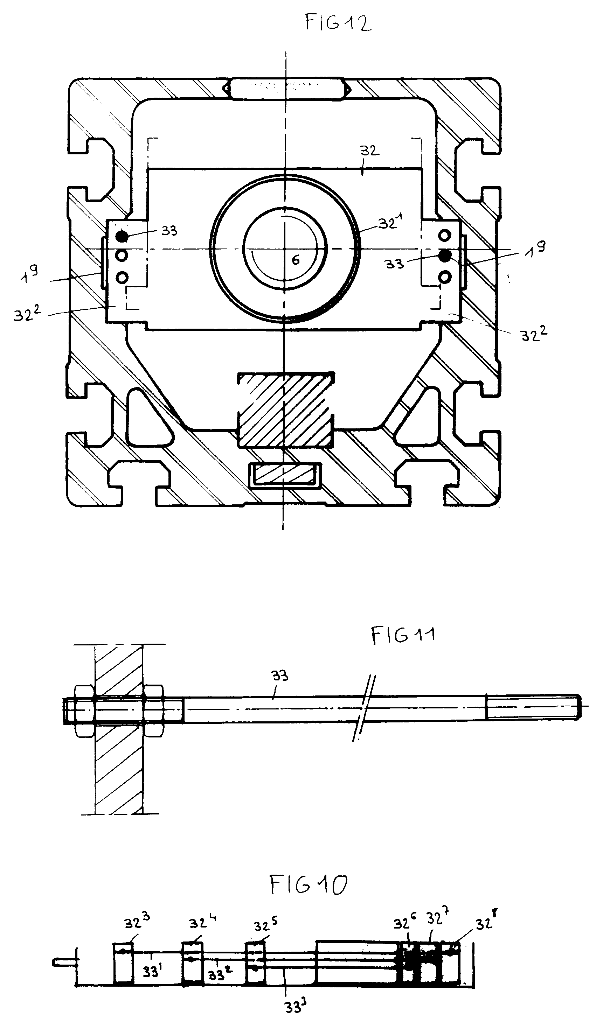

On a illustré aux figures 9 à 12 des dessins, une disposition complémentaire à l'agencement du module linéaire de guidage pouvant être utilisée quel que le moyen de déplacement et d'entraînement du trainard.

Ainsi qu'illustré aux dessins, le corps du module présente intérieurement, sur ses bords latéraux en regard, un évidement (1.9) permettant l'introduction, positionnement et guidage d'une ou plusieurs pièces (32) formant flasques disposés transversalement dans le module. Ces flasques peuvent être agencés, dans leur partie centrale, avec une ouverture (32.1) pour le passage de l'axe de guidage (6) décrit comme premier moyen de déplacement du trainard. Ces flasques sont agencés a leurs extrémités (32.2) avec des portées s'engageant et se centrant dans lesdits évidements. Ces flasques sont montés guidés sur une pluralité de tirants (33) en nombre correspondant au nombre de flasques associés au trainard. Plus particulièrement, on a ainsi illustré à la figure 10 le trainard avec les différents flasques disposés de part et d'autre. Les flasques (32.3 - 32.4 - 32.5 - 32.6 - 32.7 - 32.8) sont associés deux à deux par les tirants (33.1 - 33.2 - 33.3). Ces derniers traversent librement le trainard. La liaison des flasques et tirants associés est obtenue par boulonnage ou autre. On conçoit ainsi que lors du déplacement du trainard dans un sens ou dans un autre, il provoque le déplacement successif des différents flasques d'un côté assurant eux-mêmes le déplacement et entraînement des flasques disposés de l'autre côté du trainard. Cette disposition complémentaire complète le guidage de l'ensemble et assure le support de la vis. Le nombre de flasques (32) peut varier selon les besoins et la longueur du module linéaire, et donc de ce fait, en fonction de la longueur de la vis. Le nombre de flasques est également fonction du diamètre de la vis et de sa vitesse de rotation. L'originalité de cette caractéristique réside ainsi dans l'aménagement particulier du corps intérieur du module avec les évidements (1.9) précités pour permettre le positionnement des flasques précités en assurant ainsi un guidage complementaire dans le profil du corps du module linéaire.

Ainsi qu'illustré à la figure 12, les flasques présentent des ouvertures de positionnement et de fixation des tirants en position inversée et alternée.

Les avantages ressortent bien de l'invention. On souligne notamment la nouvelle conception de ce corps qui offre une meilleure inertie aux sollicitations extérieures. Ce corps dans sa conception est en outre indépendant de tout système d'entraînement du trainard. Les mécanismes de déplacement du trainard sont par ailleurs entièrement protégés. On obtient également un parallélisme constant et régulier entre le rail et l'axe de translation.

## Revendications

1. Module linéaire de guidage comprenant un corps (1) profilé de grande longueur recevant intérieurement un moyen autorisant le déplacement contrôlé d'un trainard (3 - 17) profilé, dont la partie supérieure déborde extérieurement du corps précité en étant susceptible de recevoir des pièces ou accessoires, une bande de protection étant disposée sur la surface supérieure du corps pour assurer en liaison avec le déplacement du trainard une protection des mécanismes disposés à l'intérieur du corps, ledit corps étant obtenu par filage, étant creux intérieurement, en présentant des côtés latéraux (1.3 et 1.4), une face de fond horizontale, la base inférieure (1.5) du corps présentant sur toute sa longueur une ouverture longitudinale, ladite ouverture débouchant vers les parties extérieures du corps constituées par des flasques ou embouts avant et arrière (4 - 5) (20 - 21) disposés aux extrémités du corps du module, les différents côtés étant agencés avec des échancrures profilées de fixation, la base inférieure de fond (1.5) constituant un plan d'appui correspondant à la largeur maximum du corps de guidage, la partie supérieure du trainard (3 - 17) présentant un étranglement (3.8 - 17.5) et se prolongeant extérieurement audit corps, ledit trainard étant disposé en appui sur des chariots transporteurs (10) prenant appui sur un rail de guidage (11) disposé dans la partie inférieure basse du module, ledit rail de guidage étant associé à une réglette de liaison (16) fixée sur la face extérieure de fond du corps du module, ladite réglette étant solidarisée à un rail de de guidage (11) disposé et centré dans un évidement formé sur la face interne supérieure de la base du corps du module,
ledit module linéaire de guidage étant caractérisé en ce que la face supérieure du corps présente des rabats (1.8) définissant une fente de passage de la partie supérieure au trainard,
et en ce que la base inférieure (1.5) du corps présente ,sur toute sa longueur, dans son épaisseur et intérieurement, l'ouverture longitudinale autorisant le positionnement et la protection de la réglette (16), la face extérieure de ladite base inférieure du corps étant rectiligne,
et en ce que le trainard présente une base inférieure avec une cavité susceptible d'autoriser son positionnement et son centrage sur des chariots (10) transporteurs coulissant le long du rail de guidage (11),
et en ce que le trainard est agencé dans sa partie supérieure avec une forme en I en présentant l'étranglement (3.8 - 17.5) entourant les bords supérieurs (1.8) du corps du module tout en débordant de celui-ci,
et en ce que le moyen d'entraînement du trainard est disposé totalement à l'intérieur du volume du corps du module, ledit moyen d'entraînement étant agencé à ses extrémités pour s'adapter sur les flasques ou embouts du corps du module pour permettre son fonctionnement,
et en ce que le corps du module présente intérieurement sur ses parois latérales des évidements profilés (1.9) autorisant le positionnement et le guidage d'une pluralité de corps formant flasques (32) assurant un guidage complémentaire du trainard à l'intérieur du corps du module.

2. Module selon la revendication 1, caractérisé en ce que le trainard est aménagé avec une base inférieure située à l'intérieur du corps du module en se prolongeant par un étranglement (3.8 - 17.5) disposé en regard de extrémités des bords supérieurs (1.8) du corps du module et se prolongeant par sa partie supérieure à l'extérieur du corps du module pour recevoir et présenter des pièces et accessoires,
et en ce que la base inférieure du trainard présente une cavité susceptible de positionner et centrer sur un ou des chariots transporteurs, des moyens d'attache accouplant le trainard aux chariots,
et en ce que la base d'appui (3.5) du trainard présente une bordure périphérique (3.7) autorisant son centrage et encastrement par rapport à le ou les chariots.

3. Module selon la revendication 1, caractérisé en ce que les parties extrêmes du corps comprennent des flasque (4 et 5) transversaux agencés avec des ouvertures pour supporter et guider le moyen d'entraînement du trainard, ledit moyen étant un axe de guidage (6) recevant au moins une bague-écrou (13) susceptible de venir en appui et poussée sur la face avant (3.3) du trainard, des éléments amortisseurs (34) étant disposés aux extrémités de l'axe de guidage situés près des flasques latéraux du corps du module.

4. Module selon la revendication 1, caractérisé en ce que les parties extrêmes du corps comprennent des embouts (20 -21) profilés fixés audit corps et agencés pour coopérer avec le moyen d'entraînement du trainard, lesdits embouts recevant respectivement un axe meneur (23) et un axe mené (24) à position fixe agencés avec des moyens de positionnement et de roulement (25 - 26) dans lesdits embouts, pour autoriser le déplacement du moyen de translation du trainard (17), ce moyen étant une courroie (18) dont les brins (18.1 - 18.2) sont disposés verticalement et en regard des faces parallèles de la partie médiane correspondante du trainard (17) à l'intérieur du corps du module.

5. Module selon la revendication 4, caractérisé en ce que le trainard (17) présente dans sa partie sousjacente à la bordure supérieure (1.8) du corps une masse (17.1) ayant deux faces parallèles (17.2 - 17.3) rectilignes dans leur partie médiane pour être en regard au passage des brins (18.1 - 18.2) de la courroie d'entraînement, les extrémités (18.3 - 18.4) de ladite courroie étant fixées à l'une des faces du trainard, les extrémités desdites faces du trainard étant détalonnées.

6. Module selon la revendication 5, caractérisé en ce que la fixation des extrémités (18.3 - 18.4) de la courroie sur l'une des faces du trainard est obtenue par des pinces (28 - 29) fixées à la face correspondante du trainard avec une capacité de réglage en position pour assurer une mise en tension réglable de la courroie.

7. Module selon la revendication 5, caractérisé en ce que les pinces (18 - 29) présentent à leurs extrémités des prolongements (28.3 - 29.3) agencés avec des ouvertures filetées autorisant le positionnement d'une vis de mise en tension (31).

8. Module selon la revendication 4, caractérisé en ce qu'au moins l'axe meneur (23) est agencé avec une partie crantée pour coopérer avec la face interne de la courroie (18) crantée de manière complémentaire sur tout ou partie de sa longueur.

9. Module selon la revendication 1, caractérisé en ce que les flasques (32) guidés le long des évidements profilés (1.9) formés sur les parois intérieures latérales du corps du module sont associés à des tirants (33), et sont disposés de part et d'autre du trainard (3.17).

## Claims

1. A linear guide module comprising a shaped body (1) of long length internally accommodating a means allowing the controlled displacement of a shaped carriage (3-17) of which the upper part protrudes externally from the above-mentioned body and is capable of accommodating parts or accessories, a protective strip being arranged over the upper surface of the body to ensure, in conjunction with displacement of the carriage, protection of the mechanisms situated inside the body, said body being obtained by extrusion, being internally hollow and having lateral sides (1.3 and 1.4), a horizontal bottom surface, the lower base (1.5) of the body having over its entire length a longitudinal opening, said opening opening out towards the external parts of the body consisting of front and rear end shields or end pieces (4-5) (20-21) arranged at the ends of the body of the module, the various sides being made with profiled fixing scalloping, the lower bottom base (1.5) constituting a bearing surface corresponding to the maximum width of the guide body, the upper part of the carriage (3-17) having a constriction (3.8-17.5) and extending externally to said body, said carriage being arranged so that it rests against transport slides (10) resting on a guide rail (11) located in the bottom lower part of the module, said guide rail being associated with a connecting strip (16) fixed on the outer surface of the bottom of the body of the module, said strip being joined to a guide rail (11) situated in and centred with respect to a recess formed on the upper inside surface of the base of the body of the module,
said linear guide module being characterised in that the upper surface of the body has flaps (1.8) defining a slot for passage of the upper part of the carriage
and in that the lower base (1.5) of the body has, over its entire length, in its thickness and internally, a longitudinal opening allowing the positioning and protection of strip (16), the outside surface of said lower base of the body being straight,
and in that the carriage has a lower base with a cavity capable of allowing its positioning and centring on slides (10) that move along the guide rail (11),
and in that the upper part of the carriage is designed with an I shape having a constriction (3.8-17.5) surrounding the upper edges (1.8) of the body of the module and projecting beyond the latter,
and in that the means of driving the carriage is accommodated entirely inside the volume of the body of the module, the ends of said drive means being made to fit on the end shields or end pieces of the body of the module in order to allow its operation,
and in that the body of the module has, inside, on its lateral walls shaped recesses (1.9) allowing the positioning and guiding of a plurality of bodies forming end shields (32) ensuring additional guiding of the carriage inside the body of the module.

2. Module as claimed in claim 1 characterised in that the carriage is designed with a lower base located inside the body of the module and extending by a constriction (3.8-17.5) placed opposite the ends of the upper edges (1.8) of the body of the module and extending through its upper part outside the body of the module in order to accommodate and present parts and accessories,
and in that the lower base of the carriage has a cavity capable of positioning and centring on one or more slides, means of attachment that couple the carriage to the slides,
and in that the bearing base (3.5) of the carriage has a peripheral border (3.7) so that it can be centred and flush-mounted relative to the slide or slides.

3. Module as claimed in claim 1 characterised in that the end parts of the body comprise transverse end shields (4 and 5) made with openings to support and guide the drive means of the carriage, said means being a guide shaft (6) that accommodates at least one round nut (13) capable of resting and pushing against the front surface (3.3) of the carriage, shock-absorbers (34) being fitted at the ends of the guide shaft situated close to the lateral end shields of the body of the module.

4. Module as claimed in claim 1 characterised in that the end parts of the body comprise shaped end pieces (20-21) fixed to said body and designed to cooperate with the drive means of the carriage, said end pieces respectively accommodating one drive shaft (23) and one driven shaft (24) in a fixed position that are designed with means of positioning and rotation (25-26) in said end pieces in order to allow displacement of drive means of carriage (17), this means being a belt (18) of which the sides (18.1-18.2) are arranged vertically opposite the parallel surfaces of the corresponding central part of carriage (17) inside the body of the module.

5. Module as claimed in claim 4 characterised in that the part of the carriage (17) underneath the upper border (1.8) of the body has a mass (17.1) having two parallel surfaces (17.2-17.3) that are straight in their central part so that they are opposite the passage of the drive belt sides (18.1-18.2), the ends (18.3-18.4) of said belt being fixed to one of the surfaces of the carriage with the ends of said surfaces of the carriage being relieved.

6. Module as claimed in claim 5 characterised in that fixing of the ends (18.3-18.4) of the belt to one of the surfaces of the carriage is obtained by grippers (28-29) mounted on the corresponding surface of the carriage with a position adjustment facility to ensure adjustable tensioning of the belt.

7. Module as claimed in claim 5 characterised in that the ends of the grippers (18-29) have extensions (28.3-29.3) made with threaded openings allowing the positioning of a tensioning screw (31).

8. Module as claimed in claim 4 characterised in that at least the drive shaft (23) is designed with a notched part to cooperate with the inside surface of synchronous belt (18) by matching it over all or part of its length.

9. Module as claimed in claim 1 characterised in that the end shields (32) guided along the shaped recesses (1.9) formed on the lateral internal walls of the body of the module are associated with tension rods (33) and are arranged either side of the carriage (3.17).

## Patentansprüche

1. Linearer Führungsmodul bestehend aus einem langen Profilkörper (1), der innen eine Vorrichtung für die kontrollierte Bewegung eines Profilschlittens (3 - 17) aufnimmt, dessen oberer Teil außen über den vorgenannten Körper hinausragt und geeignet ist, Teile oder Zubehör aufzunehmen, wobei ein Schutzstreifen auf der oberen Fläche des Körpers angeordnet ist, um in Verbindung mit der Schlittenbewegung den Schutz der Mechanismen innerhalb des Körpers zu gewährleisten, wobei der besagte Körper durch Fließpressen hergestellt wurde, innen hohl ist, zwei Seitenteile (1.3 und 1.4) und eine waagrechte Bodenseite aufweist, während der untere Basisteil des Körpers (1.5) auf der ganzen Länge eine Längsöffnung besitzt, die an den Außenteilen des Körpers mündet, welche aus einem vorderen und hinteren Flansch bzw. Endstück (4 - 5) (20 - 21) bestehen, die an den Enden des Modulkörpers angeordnet sind, wobei die verschiedenen Seitenteile mit Profilausschnitten für die Befestigung ausgebildet sind und das untere Bodenteil (1.5) eine Auflagefläche bildet, die der maximalen Breite des Führungskörpers entspricht, während der obere Teil des Schlittens (3 - 17) eine Querschnittsverminderung (3.8 - 17.5) aufweist und sich über den besagten Körper hinaus fortsetzt, wobei der besagte Schlitten auf Förderwagen (10) aufliegt, die ihrerseits auf einer Führungsschiene (11) im untersten Teil des Moduls verlaufen, wobei die besagte Führungsschiene mit einer Verbindungsleiste (16) verknüpft ist, die an der Bodenaußenseite des Modulkörpers befestigt ist, während die besagte Leiste fest mit einer Führungsschiene (11) verbunden ist, die in einer Aussparung auf der oberen Innenseite des Modulkörpersockels angeordnet und zentriert ist,
wobei der lineare Führungsmodul dadurch gekennzeichnet ist, daß die Oberseite des Körpers Klappen (1.8) aufweist, die im oberen Teil einen Durchlaufschlitz für den Schlitten beschreiben,
daß weiter der untere Basisteil (1.5) des Körpers auf ganzer Länge in der Dicke und innen eine Längsöffnung aufweist, die die Positionierung und den Schutz der Leiste (16) ermöglicht, während die Außenseite des besagten unteren Basisteils des Körpers geradlinig ist,
daß ferner der Schlitten ein unteres Basisteil mit einer Aushöhlung besitzt, die geeignet ist, seine Positionierung und Zentrierung auf die Führungsschiene (11) entlang gleitenden Förderwagen (10) zu ermöglichen,
daß ferner der Schlitten im oberen Teil mit einer I-Form ausgebildet ist und eine Querschnittsverminderung (3.8 - 17.5) um die oberen Ränder (1.8) des Modulkörpers herum und gleichzeitig darüber hinaus aufweist,
daß ferner die Antriebsvorrichtung des Schlittens vollständig im Innern des Rauminhalts des Modulkörpers angeordnet ist, wobei die besagte Antriebsvorrichtung an den Enden so ausgebildet ist, daß diese auf die Flansche bzw. Endstücke des Modulkörpers passen und ihn so funktionsfähig machen,
und daß ferner der Modulkörper innen an den Seitenwänden Profilaussparungen (1.9) aufweist, die die Positionierung und Führung einer Mehrzahl von flanschbildenden Körpern (32) ermöglichen, welche für eine zusätzliche Führung des Schlittens innerhalb des Modulkörpers sorgen.

2. Modul nach Anspruch 1, dadurch gekennzeichnet, daß der Schlitten mit einem unteren Basisteil innerhalb des Modulkörpers ausgebildet ist und sich durch eine Querschnittsverminderung (3.8 - 17.5) gegenüber den Enden der oberen Ränder (1.8) des Modulkörpers fortsetzt und sich am oberen Teil außerhalb des Modulkörpers weiter fortsetzt, um Teile und Zubehör aufzunehmen und anzubieten,
und daß weiter der untere Basisteil des Schlittens eine Höhlung aufweist, die geeignet ist, Befestigungsvorrichtungen zur Ankupplung des Schlittens an die Wagen auf einem oder mehreren Förderwagen zu positionieren und zu zentrieren,
und daß ferner der Auflagesockel (3.5) des Schlittens eine Außenumrandung (3.7) für die Zentrierung und Einspannung gegenüber dem bzw. den Wagen aufweist.

3. Modul nach Anspruch 1, dadurch gekennzeichnet, daß die äußersten Teile des Körpers querverlaufende Flansche (4 und 5) besitzen, die mit Öffnungen ausgebildet sind, um die Antriebsvorrichtung des Schlittens zu tragen und zu führen, wobei es sich bei besagter Vorrichtung um eine Führungsachse (6) handelt, die mindestens einen Mutterring (13) aufnimmt, der in Anschlag kommen und auf die Vorderseite (3.3) des Schlittens gedrückt werden kann, wobei stoßdämpfende Elemente (34) an den Enden der Führungsachse in der Nähe der seitlichen Flansche des Modulkörpers angeordnet sind.

4. Modul nach Anspruch 1, dadurch gekennzeichnet, daß die äußersten Teile des Körpers Profilendstücke (20 - 21) besitzen, die am besagten Körper befestigt und so ausgebildet sind, um mit der Antriebsvorrichtung des Schlittens zusammenzuwirken, wobei die besagten Endstücke jeweils eine in fester Stellung befindliche Antriebsachse (23) und Abtriebsachse (24) mit Positionier- und Lagervorrichtungen (25 - 26) in den besagten Endstücken aufnehmen, um die Verschiebung der Fahrvorrichtung des Schlittens (17) zu ermöglichen, wobei es sich bei dieser Vorrichtung um einen Riemen (18) handelt, dessen Trume (18.1 - 18.2) senkrecht und gegenüber den parallelen Seiten des dem Schlitten (17) entsprechenden mittleren Teils innerhalb des Modulkörpers angeordnet sind.

5. Modul nach Anspruch 4, dadurch gekennzeichnet, daß der Schlitten (17) in dem unter der oberen Umrandung (1.8) des Körpers liegenden Teil eine Masse (17.1) mit zwei geradlinigen parallelen Flächen (17.2 - 17.3) im mittleren Teil aufweist, um dem Durchlauf der Trume (18.1 - 18.2) des Antriebsriemens gegenüberzuliegen, wobei die Enden (18.3 - 18.4) des besagten Riemens an einer der Flächen des Schlittens befestigt sind und die Enden der besagten Schlittenflächen hinterdreht sind.

6. Modul nach Anspruch 5, dadurch gekennzeichnet, daß die Befestigung der Enden (18.3 - 18.4) des Riemens an einer der Flächen des Schlittens durch Klemmen (28 - 29) erfolgt, die an der entsprechenden Seite des Schlittens positionsverstellbar befestigt werden, um für eine regulierbare Riemenspannung zu sorgen.

7. Modul nach Anspruch 5, dadurch gekennzeichnet, daß die Klemmen (18 - 29) an ihren Enden Verlängerungsstücke (28.3 - 29.3) aufweisen, die mit Gewindeöffnungen für die Positionierung einer spannungsregulierenden Schraube (31) ausgebildet sind.

8. Modul nach Anspruch 4, dadurch gekennzeichnet, daß zumindest die Antriebsachse (23) ein gezahntes Teilstück aufweist, um mit der Innenseite des Zahnriemens (18) auf ganzer oder teilweiser Länge in ergänzender Weise zusammenzuwirken.

9. Modul nach Anspruch 1, dadurch gekennzeichnet, daß die die Profilaussparungen (1.9) an den inneren Seitenwänden des Modulkörpers entlang geführten Flansche (32) mit Zugstangen (33) verbunden und beiderseits des Schlittens (3.17) angeordnet sind.
